# EUROPEAN PATENT APPLICATION

(11) **EP 4 603 787 A1**
(43) Date of publication of application: **20.08.2025**
(21) Application number: 24158456.4
(22) Date of filing: 19.02.2024
(51) Int. Cl.: G01B 5/00, A01G 23/00

(54) **SYSTEM AND METHOD FOR A FORESTRY VEHICLE**

(71) Applicant: Deere & Company, Moline, IL 61265 (US)
(72) Inventor: BJÖRKLUND, Jani, 68163 Mannheim (DE); PALMROTH, Mikko, 68163 Mannheim (DE)
(74) Representative: Reichert, Christian

(57) **Abstract**

System for measuring and analyzing a forest area, comprising at least one stereo camera 40, a camera control unit 50, a computing unit 60 to receive data from the stereo camera and to compute the received data and to calculate and determine information based on the data, a display unit 61, configured to display the results to an operator of a forestry vehicle 10, the system being configured to be integrated in a forestry vehicle 10, wherein the information is any one of the following, the shape of a tree or stem, the type of tree, the bark or surface of a tree or stem, irregularities of a tree or stem, diameter of a tree or stem, density or basal area of a working area of the forestry vehicle.

## Description

The present invention concerns system and method for a forestry vehicle.

Mobile work machines, in particular, forestry equipment and forestry machines, e.g. harvesters and forwarders, have an articulated boom and a tree stem processing tool at the tip of the boom. The tool can be e.g. a harvester head, a felling head, a harvesting and processing head, or a log grapple equipped with a sawing apparatus. The tool can be used e.g. to cut standing trees, to process felled trees or to grab objects, such as logs or tree stems. When using such a tool with power-driven operations, it is operated under the control of an operator of the work machine.

The mobile work machines comprise an articulated boom assembly with the tool attached to a boom tip of the boom assembly. Such tools handle heavy load, that may comprise a load of soil or logs or raw material. Usually, such booms are controlled by hydraulic actuators that are driven by hydraulic pressure from one or more pumps. The pumps are usually powered by the primary power source of the vehicle.

The stem processing tool or harvester tool comprises several movable knives that are used to grab the log/tree with the harvester tool. These knives are hydraulically actuated and controlled by the controller mounted on the harvester tool. Once the tree is grabbed with the harvester tool, a saw blade, usually at a bottom side of the harvester tool, is activated to cut the tree/stem. After the cutting process the tree will fall over, only being fixated in the harvester tool by the knives closed around the stem. Usually, within the harvester tool, feeding wheels are activated to pull/push the stem through the harvester tool and the knives, so that bark/branches are removed, and the log/stem is cut up into log pieces of determined size.

The forestry vehicle may be used for thinning operations in a certain forest area. One purpose of thinning is to reduce the number of trees that are near each other. The proximity may lead to reduced growth of the trees and thus less timber generation. The trees would stagnate in growth. Thinning is based on the basal area calculation of the trees, which is a function of the tree diameters in a height of 1,3 meters above the ground in a certain working area and the overall forest area, resulting in a number that gives an indication of the available timber at that time and about the current state of the standing trees, i.e. current growth state, tree health.

Thinning may depend on the age of the standing trees in the work area, the type or specimen of trees present and the current state of the trees, i.e. damages, pest infestations, fungi infestations, relative distances of the trees with each other, different growth rate of neighboring trees.

The operator may measure the tree basal area manually and calculate the basal area index. Based on the results, the operator may manually select trees based on experience, which requires knowledge of the specimens and the possible occurring circumstances, i.e. present infestations, damage, and judgment of distances of neighboring trees. Depending on the individual operator experience, the thinning results may differ.

The thinning operation is time consuming for the operator having to leave the vehicle and process manual measurement of the trees in various terrain and weather conditions. There are also intentions to facilitate tree density measurement by drones, or small flying aircraft devices. Yet, correct measurement is often not possible, due to the foliage of the trees, branches in the fly path, terrain obstacles and weather conditions.

It is an object of the present invention to overcome these disadvantages.

The invention is a system for measuring and analyzing a forest area, comprising at least one stereo camera, a camera control unit, a computing unit to receive data from the stereo camera and to compute the received data and to calculate and determine information based on the data, a display unit, configured to display the results to an operator of a forestry vehicle, the system being configured to be integrated in a forestry vehicle, wherein the information is any one of the following, the shape of a tree or stem, the type of tree, the bark or surface of a tree or stem, irregularities of a tree or stem, diameter of a tree or stem, density or basal area of a working area of the forestry vehicle.

The system enables the automated detection of trees in the field of view of the stereo camera. The system processes the camera data and identifies and evaluates the trees regarding the basal area, the tree type or specimen, the tree shape and tree status such as infestations or damages. The system may determine trees which are deemed to be felled and present the result on the display to the operator. The determination for felling is based on the planned final tree density or basal area. Further the system determines the trees depending on identified damages or small shape, or nearness to other trees. The system may present the operator with visual aid which trees are optimal for felling regarding the thinning operation. The operator may remain in the vehicle cabin and is able to decide the trees for the felling process without the requirement to leave the cabin and is able to do so in a timely manner without the time required to facilitate the measurements.

In a further embodiment the diameter of the tree may be measured in 1,3 meters above the ground.

Use according to the nomenclature of the basal area definition enables the operator to achieve comparable thinning results within the work team and within the work area or forest area. The results are further comparable to other forest areas, enabling a thinning standard in the forestry industry.

In a further embodiment the system may be adapted to exchange data with a database.

The tree positions, tree type, status may be exchanged with a database. This may be a production database and enables the operator to aggregate tree data for future work processes and to homologize the data between different forestry vehicles. The database may display the data of the thinning process or other tree data for additional work processes related to the forest area.

In a further embodiment the system may be adapted to detect trees in the working area to determine a tree density or basal area, and to compare the detected density or basal area with a planned density or basal area, and to display the deviation to the operator.

The system may calculate a present tree density form the camera data and compare the result with a planned or intended tree density. The result may be displayed to the operator indicating the work progress or the intended work area for ongoing felling work. The operator is relieved from manual calculations reducing the possibility for error and xthe work load of the operator.

In a further embodiment the computing unit may use a pixel based or object-based method.

The computing unit is enabled to identify the trees or stems in the camera data feed and able to determine the related tree parameters and display these to the operator on the display.

In a further embodiment the system may identify individual trees, which are either damaged or not straight or to be felled to reach the planned density or basal area.

The analysis of the camera data may detect irregular tree shapes. The trees may be not in a straight shape or may be damaged. Such trees may be difficult to detect for the operator depending on the conditions of the work area. The system may detect these irregularities and alert the operator to the tree condition.

Another invention is a method to measure and analyze a forest area, comprising at least one stereo camera, a camera control unit, a computing unit to receive data from the stereo camera and to compute the received data and to calculate and determine information based on the data, a display unit, configured to display the results to an operator of a forestry vehicle, the system being configured to be integrated in a forestry vehicle, wherein the information is any one of the following, the shape of a tree or stem, the type of tree, the bark or surface of a tree or stem, irregularities of a tree or stem, diameter of a tree or stem, density or basal area of a working area of the forestry vehicle, wherein the method uses a pixel based or object-based method to compute the camera data.

The method enables the automated detection of trees in the field of view of the stereo camera. The system processes the camera data and identifies and evaluates the trees regarding the basal area, the tree type or specimen, the tree shape and tree status such as infestations or damages. The system may determine trees which are deemed to be felled and present the result on the display to the operator. The determination for felling is based on the planned final tree density or basal area. Further the system determines the trees depending on identified damages or small shape, or nearness to other trees. The system may present the operator with visual aid which trees are optimal for felling regarding the thinning operation. The operator may remain in the vehicle cabin and is able to decide the trees for the felling process without the requirement to leave the cabin and is able to do so in a timely manner without the time required to facilitate the measurements.

Further advantages are described in the following figures, wherein
F igure 1 shows a view of a common forestry vehicle, i.e. a harvester;
F igure 2 displays a tool for the vehicle, i.e. a harvester head;
F igure 3 shows the visualization of the system from a camera picture;
F igure 4 shows the visualization of the system derived from a positional determination.

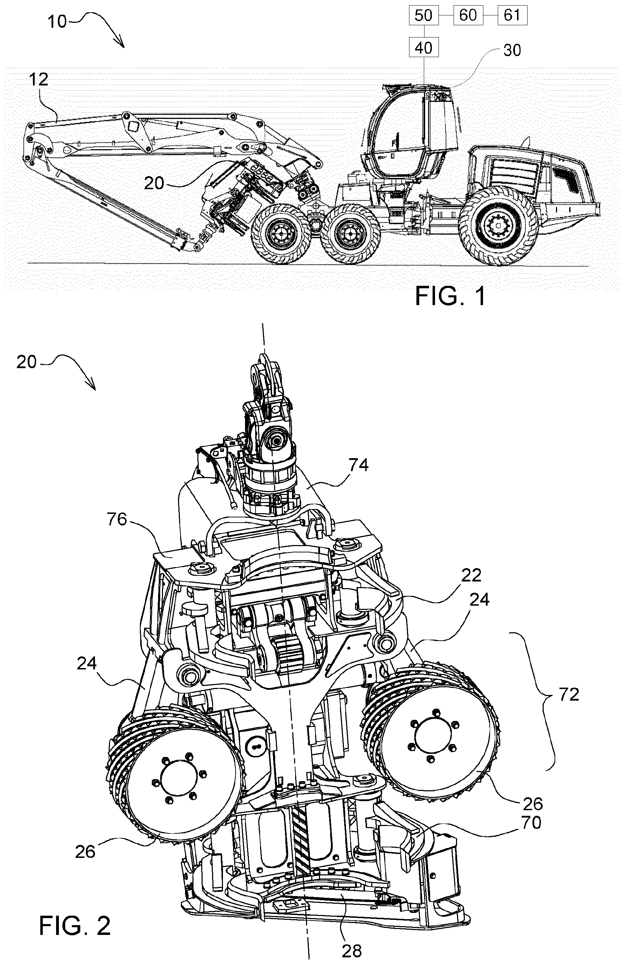

Figure 1 shows a forest harvester vehicle 10. It comprises usually of a front and rear chassis which are articulated and a driver cabin 30 for the operator. The vehicle 10 has boom assembly 12 to which a timber working device 20, e.g. a harvester head is attached. The boom assembly 12 is able to rotate and to tilt, and to extend and to rotate the timber working device 20 by the arrangement of the individual booms. For the felling and processing of a tree into logs, the operator extends and maneuvers the boom assembly 12 so that the harvester head 20 can close the upper and lower knives 22, 70 around the tree stem. The operator cuts the tree with the integrated saw blade 28 so that the stem falls over and is held at the lower end with the knives 22, 70 of the harvester head 20. In a next step the drive system 72, consisting of the feeding arms 24 holding the feeding wheels 26 is operated so that the feeding wheels 26 by their gripping surface pull or push the stem through the harvester head 20 from the upper 22 to the lower knives 70 so that the stem can be cut into logs of predetermined length, controlled by the drive system 72.

When the feeding wheels 26 transport the stem through the harvester head 20, the knives 22, 70 need to maintain a close grip to ensure the stem stays within operational parameters and is kept safely inside the harvester head 20. Also, the knives 22, 70 are used to remove branches and bark from the stem. This leads to the difficulty that a tight grip may remove the branches easily but will at the same time increase the friction of the stem and thus increase the workload on the drive system 72 which can lead to damages to the surface and a loss of quality.

The shape of the stem is also an important factor in that a bend or curved shape will require a constant adaption of the grip of the knives 22, 70, leading to a longer processing time and reduced productivity. The grip may also damage the stem and reduce the wood quality. Damaged trees that are processed may undergo further damage during processing as the wood may have cracks in the stem which can further increase during the processing. Broken branches may complicate the processing as the removal by the knives 22, 70 may require more grip force and as stated above may result in more damage to the stem.

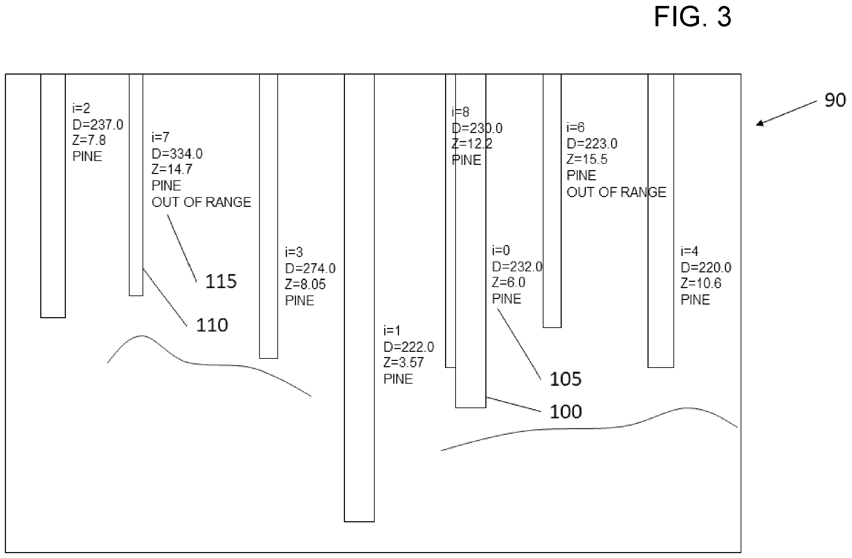

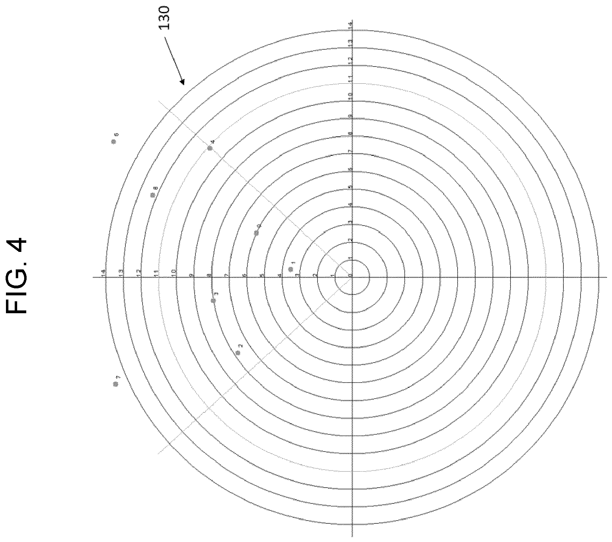

The system comprises a stereo camera 40 that may be attached to an outside of the cabin 30 or on the vehicle 10. The camera 40 is connected to a camera control unit 50 that may be used to give commands to the camera 40, i.e. turning the camera 40 or changing the settings or data feed. The stereo camera 40 is connected to a computing unit 60 which receives the camera data feed and computes the data to identify singular trees in the surroundings of the vehicle. The computing unit 60 is enabled to identify the tree types, the diameter of the stems, the distance of the trees to the camera center point or to the boom assembly base point, the shape of the trees and damages of the trees and the bark. The computing unit 60 is connected to a display unit 61 inside the cabin 30 to display the information to the vehicle operator. Further details of the display unit 61 and the information received from the data feed will be stated in connection with Figure 3 and 4.

The harvester head 20 of the present invention is shown in Figure 2. It comprises a base frame 76 which is extending along a feeding axis and a movably fixed tilt bracket 74 which is attachable to the boom assembly 12 of the vehicle 10. The frame 76 contains all necessary parts and devices to ensure the operation of the harvester head 20, such as controller, hydraulic hubs, hydraulic lines, hydraulic motors and hydraulic valves. It further comprises movable arms 24 rotatably holding the feeding wheels 26 so that these can be pushed against the stem surface. In a vertical direction, above the feeding wheels 26 are the upper knives 22 and below are the lower knives 70 which are controlled by hydraulic actuators usually but may also be controlled by electric actuators or motors. At the bottom of the frame 76 the saw blade 28 is placed below the lower knives 70.

During cutting operation, the upper and lower knives 22, 70 are closed around the stem. The harvester head 20 may only have upper 22 or lower knives 70, this does not change the operation procedure. Further, the harvester head 20 may have more than two feeding wheels 26, such as four, which also does not alter the process or use of this invention.

Figure 3 depicts a view 90 of the stereo camera 40 which is received and interpreted by the computing unit 60 and transmitted to the display unit 61. The view can be an overlay over a real feed from the stereo camera 40 or can be a separate view only showing computed information to the operator. The view comprises the identified tree stems 100, 110 in relation to a determined viewpoint. The viewpoint can be selectable and can be set as the base point of the boom assembly 12 or as the operator position. In the current example of Fig. 3 and 4 the base point of the boom assembly 12 is selected. The trees are shown in vertical lines, representing the outer contour of the stem. The lines can have different color to support easy identification on the display unit 61. The stems are shown in perspective whereas close objects appear larger and may also hide or overlap objects in the background, such as shown with the stem 100 on the right center position.

The computing unit 60 may identify the tree type and display the corresponding data next to the stem 100, 110 in an info field 105, 115. The computing unit 60 may identify the stems by an index number i. The view may show the diameter of the stem and a radial distance to the base of the boom assembly 12. The view may also generate an indicator if the stem is out of reach of the boom assembly 12 in the current vehicle position. The view may also indicate a tree damage in the info field 105, 115.

As another example the tree 110 is shown as out of range so that the operator has an indication that the vehicle 10 must be moved to reach that tree.

The basal area and thinning value may be displayed in a separate screen or on the same screen, view, depending on the identified tree or stem diameters by the stereo camera 40.

Figure 4 shows a range-oriented view 130 where the identified trees are displayed in a centered field around the boom assembly base point or any selected point of view. The view 130 allows to determine trees in relation to their distance to the vehicle 10 represented in the center point. The trees are numbered by their index i so that the operator can identify the different positions. Depending on the reach of the used boom assembly 12 the reach setting can be changed. View 130 may also display the tree density of basal area of the trees in the vicinity.

The system enables the operator to make decisions which are based on the current forest or work area conditions and relieves the operator to assume or rely on experience.

## Claims

1. System for measuring and analyzing a forest area, comprising
at least one stereo camera (40),
a camera control unit (50),
a computing unit (60) to receive data from the stereo camera (40) and to compute the received data and to calculate and determine information based on the data,
a display unit (61), configured to display the results to an operator of a forestry vehicle (10),
the system being configured to be integrated in a forestry vehicle (10),
wherein the information is any one of the following,
the shape of a tree or stem,
the type of tree,
the bark or surface of a tree or stem,
irregularities of a tree or stem,
diameter of a tree or stem,
density or basal area of a working area of the forestry vehicle.

2. System according to claim 1, wherein the diameter of the tree is measured in 1,3 meters above the ground.

3. System according to any of the preceding claims, wherein the system is adapted to exchange data with a database.

4. System according to any of the preceding claims, wherein the system is adapted to detect trees in the working area to determine a tree density or basal area, and to compare the detected density or basal area with a planned density or basal area, and to display the deviation to the operator.

5. System according to any of the preceding claims, wherein the computing unit (60) uses a pixel based or object-based method.

6. System according to any of the preceding claims, wherein the system identifies individual trees, which are either damaged or not straight or to be felled to reach the planned density or basal area.

7. Method to measure and analyze a forest area, comprising
at least one stereo camera (40),
a camera control unit (50),
a computing unit (60) to receive data from the stereo camera (40) and to compute the received data and to calculate and determine information based on the data,
a display unit (61), configured to display the results to an operator of a forestry vehicle (10),
the system being configured to be integrated in a forestry vehicle (10),
wherein the information is any one of the following,
the shape of a tree or stem,
the type of tree,
the bark or surface of a tree or stem,
irregularities of a tree or stem,
diameter of a tree or stem,
density or basal area of a working area of the forestry vehicle,
wherein the method uses a pixel comparison method to compute the camera data.
